(19) Europäisches Patentamt
European Patent Office
Office européen des brevets

(11) **EP 3 120 479 B1**

(12) **EUROPEAN PATENT SPECIFICATION**

(45) Date of publication and mention
of the grant of the patent:
**19.02.2020 Bulletin 2020/08**

(51) Int Cl.:
*H04L 1/18* *(2006.01)*          *H04L 1/00* *(2006.01)*

(21) Application number: **14718189.5**

(86) International application number:
**PCT/SE2014/050348**

(22) Date of filing: **20.03.2014**

(87) International publication number:
**WO 2015/142237 (24.09.2015 Gazette 2015/38)**

(54) **METHOD AND APPARATUS FOR COMBINING FRAMES IN WLAN**

VERFAHREN UND VORRICHTUNG ZUR FRAMEKOMBINATION IN EINEM WLAN

PROCÉDÉ ET APPAREIL POUR COMBINER DES TRAMES DANS UN RÉSEAU LOCAL SANS FIL (WLAN)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.01.2017 Bulletin 2017/04**

(73) Proprietor: **Telefonaktiebolaget LM Ericsson
(publ)
164 83 Stockholm (SE)**

(72) Inventors:
• **FURUSKÄR, Anders
S-113 44 Stockholm (SE)**
• **WILHELMSSON, Leif
S-247 55 Dalby (SE)**
• **ZEE, Oscar
S-118 67 Stockholm (SE)**
• **MILDH, Gunnar
S-192 55 Sollentuna (SE)**

(74) Representative: **Zacco Sweden AB
P.O. Box 5581
114 85 Stockholm (SE)**

(56) References cited:
**EP-A1- 1 860 813          EP-A2- 1 843 503
EP-A2- 2 280 506          US-A1- 2003 112 780
US-A1- 2004 252 798          US-A1- 2005 235 190**

**Description**

**TECHNICAL FIELD**

The disclosure relates to Wireless Local Area Networks (WLAN), and more specifically to a station of a WLAN and to a method for combining information from frames received in the station.

**BACKGROUND**

Combination techniques

Combining of multiple transmissions of the same data is a technique for improving performance, sometimes referred to as soft combining. For every received transmission, the receiver stores so called soft information for the transmission. In one example the soft information indicates how likely it is that a bit is a zero or a one, e.g. a 75% probability that the bit is a one and a 25% probability that the bit is a zero. If two individual transmissions go wrong and cannot be decoded individually, there are still chances that a combination of soft information from the transmissions provides a decodable transmission.

A simple example using bipolar [+/-1] signals illustrates the basic principle of soft combining. The transmitter sends the bit sequence [1,0], represented by the signal levels T = [+1,-1]. Because of noise, the receiver receives this as R1 = [+0.5, +0.2], which is interpreted as [+1,+1], which is not correct and results in a decoding error. The transmitter then retransmits T, which is now received as R2 = [-0.3, -0.8]. If the retransmission is decoded individually, R2 would be interpreted as [-1,-1], which is again an error. However, performing the operation R1+R2 = [+0.2,-0.6] before decoding, results in a correct interpretation [+1,-1].

Other examples of combination techniques may support complex signal representations, more advanced coding schemes, and alternative soft information metrics. Some combination technique examples are described in Dahlman, Erik; Parkvall, Stefan; Sköld, Johan; Beming, Per (2008). 3G Evolution - HSPA and LTE for Mobile Broadband (2 ed.). Academic Press. pp. 119-123. ISBN 978-0-12-374538-5.

Global System for Mobile Communications (GSM) is a standard set developed by the European Telecommunications Standards Institute (ETSI) to describe protocols for second generation (2G) digital cellular networks used by mobile phones. The GSM standard originally described a digital, circuit-switched network optimized for full duplex voice telephony, and was expanded over time to include data communications, first by circuit-switched transport, then packet data transport via General Packet Radio Services (GPRS) and Enhanced Data rates for GSM Evolution (EDGE). Further improvements were made when the 3rd Generation Partnership Project (3GPP) developed third generation (3G) Universal Mobile Telecommunication System (UMTS) standards and High Speed Packet Access (HSPA) followed by fourth generation (4G) Long Term Evolution (LTE) standards.

A combining method relies on the fact that the information or data that is combined indeed corresponds to the same original data. A sequence number and an address of the transmitting side may be used to verify at the receiving side that the combined information represents the same data. The receiver must be able to obtain this knowledge even if the information or data itself cannot be decoded. In GSM/EDGE, which supports soft combining, this is solved by coding the header, containing the sequence numbers, with a stronger code than the data, so that it is decodable even when the data is not. In LTE and HSPA, the sequence number and address are sent on a separate channel from the data, and may hence be decoded even if the data is not.

WLAN/WiFi / IEEE 802.11 Basics

IEEE 802.11 is a set of Media Access Control (MAC) and Physical layer (PHY) specifications for implementing WLAN computer communication in the 2.4, 3.6, 5 and 60 GHz frequency bands. The specifications are created and maintained by the IEEE Standards Committee IEEE 802. The base version of the standard was released in 1997 and has had subsequent amendments. The standard and amendments provide the basis for wireless network products using the Wi-Fi brand.

A wireless local area network (WLAN) links two or more devices using some wireless distribution method, and usually providing a connection through an access point to the wider Internet. This gives users the ability to move around within a local coverage area and still be connected to the network. All devices that can connect are referred to as stations. The wireless stations fall into one of two categories: access points and clients. Access points (AP), normally routers, are base stations for the wireless network. They transmit and receive signals at radio frequencies for wireless enabled devices. Wireless clients can be mobile devices such as laptops, personal digital assistants, IP phones and other smartphones, or fixed devices such as desktops and workstations that are equipped with a wireless network interface. The IEEE 802.11 has two basic modes of operation: an ad hoc mode and an infrastructure mode. In the ad hoc mode clients communicate directly peer-to-peer. In the infrastructure mode, clients communicate through an AP that serves as a bridge to other networks such as the Internet or a Local Area Network (LAN). The following sections summarize some IEEE 802.11 characteristics.

*The MAC Protocol*

WiFi systems based on the IEEE 802.11 standards have many aspects in common with cellular systems. One difference is the MAC protocol, which for cellular systems typically is scheduled, and for WiFi is contention-based. This means that a receiving station does not know in advance what transmitting station it will receive data from and what transmission format that is used. The IEEE 802.11 MAC protocol is described in some more detail below.

The basic IEEE 802.11 MAC, the so-called Distributed Coordination Function (DCF), employs a Carrier Sense Multiple Access with Collision Avoidance (CSMA/CA)-based MAC. The same protocol is applied by all stations including the APs, i.e. in both downlink and uplink transmissions. The standard also supports a Point Coordination Function (PCF) mode, in which APs have more control over the medium usage. Supporting the PCF mode is however optional, and rarely implemented.

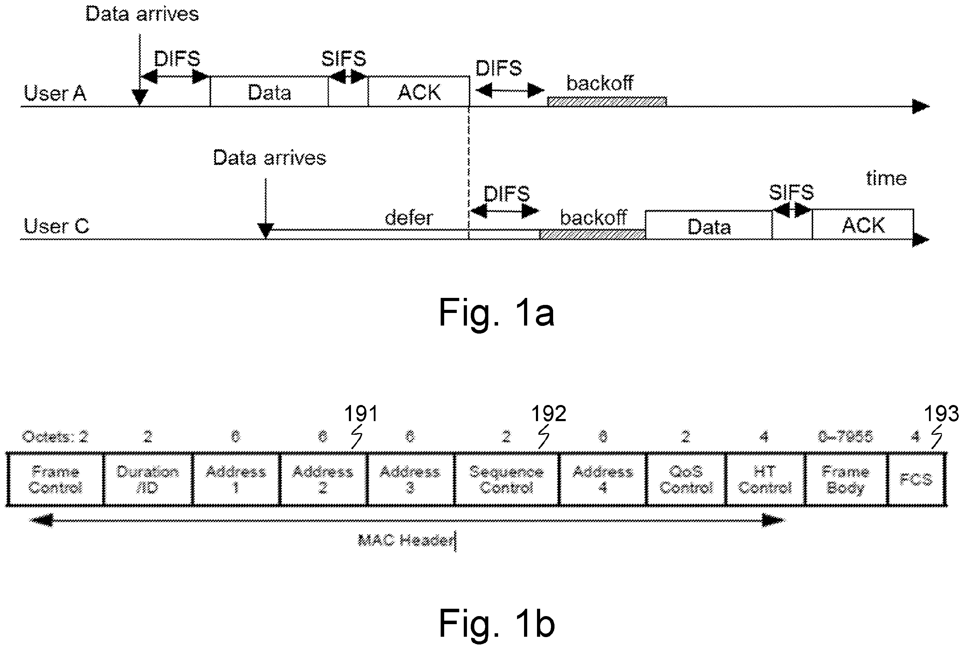

As depicted in **Figure** 1a, a station using the DCF mode (User A) and wishing to transmit a frame first senses the medium. If the medium is sensed to be idle for a certain minimum time, i.e. a so-called Distributed Inter Frame Space (DIFS), the frame is transmitted. The DIFS is $50\mu s$ in the release IEEE 802.11b. If the medium is busy, as it is for user C in **Figure 1a,** the station first waits until the medium is sensed idle (defer). When this occurs, the station defers the transmission during a DIFS. As an immediate transmission may lead to collisions if more than one station is waiting until the medium is sensed idle, the station sets a back-off timer to a random delay, and transmits only when this back-off timer has expired instead of transmitting immediately when the medium is sensed idle. The back-off timer is only activated when the medium is sensed idle. Whenever the medium is sensed busy, a deferral state is entered in which the back-off timer is not activated. When the back-off timer expires, the frame is transmitted. If the frame is successfully received by a station, the receiving station responds with an acknowledgement to the transmitting station. The acknowledgement is sent a Short Inter Frame Space (SIFS) after the data frame is received. The SIFS is $10\mu s$ in the release IEEE 802.11b. Since SIFS is shorter than DIFS, no other station will access the medium during this time. If no acknowledgement is received by the transmitting station, the transmitting station generates a new back-off timer value, and retransmits the frame when the new back-off timer has expired. The reason for not receiving any acknowledgement may be either because the transmitted frame is lost resulting in that no acknowledgement is returned or because the acknowledgement itself is lost. Even if the frame is successfully acknowledged, the transmitting station must generate a back-off timer value and wait for it to expire before transmitting the next frame. To avoid congestion when collisions occur, back-off timer values are drawn from distributions with larger and larger expectations for every retransmission attempt. For the n:th transmission attempt, the back-off timer value is drawn from the uniform distribution $U[0,\min((CW_{min})*2n-1 - 1, CW_{max})]$. $CW_{min}$ and $CW_{max}$ are constants with values depending on the physical layer. For the release IEEE 802.11b the values are $CW_{min} = 31$ and $CW_{max} = 1023$. The back-off timer value is measured in units of slot times, which for release IEEE 802.11b are 20 $\mu s$ long.

In the Enhanced DCF mode, defined in the release IEEE 802.11e standard, service prioritization is introduced. This is done by using back-off and deferral parameters that depend on a service type.

Since frames are transmitted after a DIFS when the medium is free, the minimum delay is equal to the transmission time plus a DIFS, which for release IEEE 802.11b is about 1 ms for a 1500 byte frame. The almost immediate acknowledgement, with a transmission time of around 0.1ms, means that the Round Trip Time (RTT) on layer 2 is of the order of 1 ms.

Because of the back-off and deferral times between transmissions, the medium is not fully used even at high traffic loads. The maximum link utilization reached depends on the frame size, and varies between 50% for voice to 70-80% for data.

*The MAC Header*

The release IEEE 802.11n MAC frame format is depicted in **Figure 1b.** It contains the address 191 of the transmitting station and a sequence control field 192. This information is covered by the same Frame Check Sequence (FCS) 193 as the data. FCS is used to check if the frame information is correctly decoded. Hence, if the data cannot be decoded correctly, neither can the transmitting station address and the sequence control field. Release IEEE 802.11n is only used as one example. Similar principles hold for other IEEE 802.11 standards, e.g. 802.11ac.

*The PLCP Header and Signal (SIG) Fields*

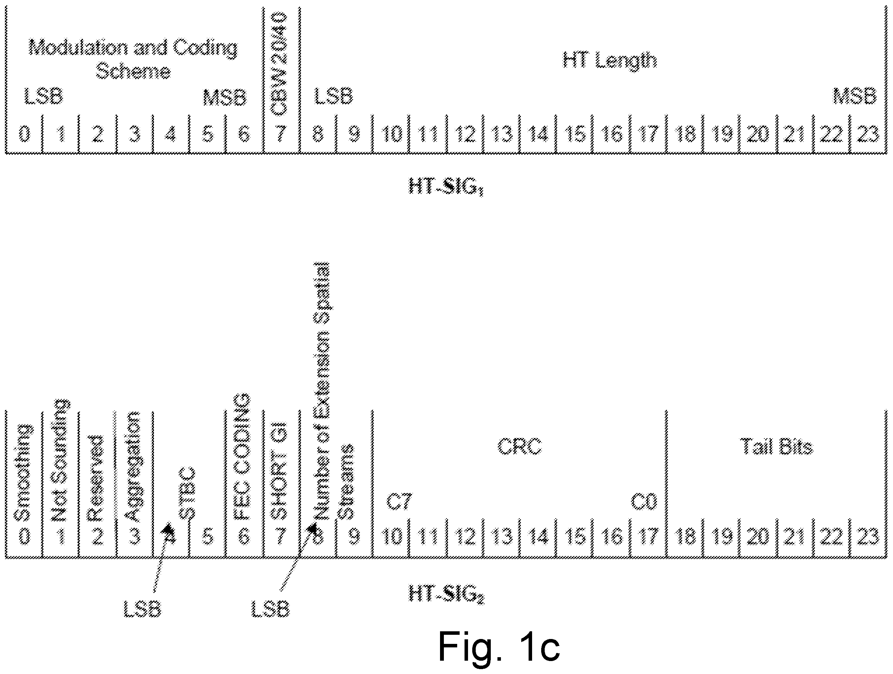

Before being transmitted, MAC frames are passed to the Physical Layer Convergence Protocol (PLCP), adding some information to the receiver in a PLCP header. The SIG field of IEEE 802.11n PLCP frame is depicted in **Figure 1c.** HT relates to High Throughput mode of IEEE 802.11n. HT-SIG1 and HT-SIG2 are transmitted in two different symbols respectively. MSB and LSB in the **Figure 1c** refers to Most and Least Significant Bit, respectively. The SIG field contains information e.g. about the used Modulation and Coding Scheme (MCS) and the length of the frame. It is covered by a separate Cyclic Redundancy Check (CRC), and can hence be decoded independently of the data. However, it does not contain any sequence number or any transmitter address.

Problems with Existing Solutions

Soft combining of multiple transmissions of the same data is a technique for improving radio link performance. It relies on receiver knowledge of the transmitted data, for example that the transmitted data, even if it cannot be decoded, is actually representing the same user data and not another segment of data from the same or another transmitter. This knowledge is not explicitly provided by in e.g. in 802.11 systems. Hence, soft combining is not supported in such systems.

In 802.11 systems the information about the address of the transmitter is coded together with the data. Hence, if data decoding fails, also decoding of the transmitter address and the sequence number fails. Typically, a stop-and-wait ARQ protocol is used, so a sequence number is not required.

US 2005/0235190 A discloses that a receiver receives data transmitted from a transmitter. The data is stored in a buffer, and a reliability value of the data is computed by a computing unit. A determining unit determines reliability of the data by comparing a reliability value of existing data in the buffer and a reliability value of the data. When the reliability value of the data is higher than a predetermined value, the existing data is combined with the data. Then, an error correcting unit performs error correcting on combined data obtained, and outputs decoded bits. If the combined data includes many errors, retransmission of the data is requested to the transmitter. When the reliability value of the data is lower than the predetermined value, retransmission of data is directly requested without combining the data with the existing data.

EP 1843503 A discloses that a receiver with a time diversity combining component recovers a digital data signal transmitted over a voice channel of a digital wireless telecommunications network. A feature extraction module receives an audio frequency waveform encoding the digital data signal and generates a feature vector representing the digital data signal. A bit sequence estimation module analyzes the feature vector and generates an estimated bit sequence corresponding to the digital data signal. A memory stores the feature vector if the estimated bit sequence contains errors. A time diversity combining component generates a second estimated bit sequence by analyzing the first feature vector in combination with one or more feature vectors stored in the memory.

**SUMMARY**

It is therefore an object to address some of the problems outlined above, and to provide a solution for combining frame information in a WLAN station. This object and others are achieved by the method and the station according to the independent claims, and by the embodiments according to the dependent claims. In accordance with a first aspect, a method performed by a station of a wireless local area network for combining information from received frames is provided. The method comprises receiving a first frame from another station of the wireless local area network, and determining a radio characteristic of the first frame. The method further comprises comparing the radio characteristic of the first frame with a radio characteristic determined for a previously received second frame, and determining whether to combine information from the first frame with information from the previously received second frame based on the comparison. When it is determined to combine the information, the method comprises combining information from the first frame with information from the previously received second frame.

In accordance with a second aspect, a station for a wireless local area network adapted to combine information from received frames is provided. The station is configured to receive a first frame from another station of the wireless local area network, and determine a radio characteristic of the first frame. The station is also configured to compare the radio characteristic of the first frame with a radio characteristic determined for a previously received second frame, and determine whether to combine information from the first frame with information from the previously received second frame based on the comparison. The station is further configured to combine information from the first frame with information from the previously received second frame when it is determined to combine the information.

An advantage of embodiments is that they allow for combining techniques for 802.11 systems. Combining techniques improve link performance, and thereby coverage and capacity.

Another advantage of embodiments is that no standardized interfaces are affected as the frame format remains unchanged. This allows for reduced complexity at implementation of the embodiments.

Other objects, advantages and features of embodiments will be explained in the following detailed description when considered in conjunction with the accompanying drawings and claims.

## BRIEF DESCRIPTION OF THE DRAWINGS

**Figure 1a** is a schematic illustration of the sensing, deferral, and back-off features used in a WLAN.
**Figure 1b** is a schematic illustration of the IEEE 802.11n MAC frame format.
**Figure 1c** is a schematic illustration of the SIG field of the IEEE 802.11n PLCP header.
**Figure 2a** is a block diagram schematically illustrating an example WLAN scenario with three transmitting stations and one receiving station.
**Figures 2b-c** are diagrams schematically illustrating results from average received power measurements and angle of arrival measurements at the receiving station of the example scenario illustrated in **Figure 2a.**
**Figure 3a** is a block diagram schematically illustrating an example WLAN scenario with two transmitting stations, a reflecting object and one receiving station.
**Figures 3b-c** are diagrams schematically illustrating results from impulse response measurements and frequency response measurements at the receiving station of the example scenario illustrated in **Figure** 3a.
**Figures 4a-b** are flowcharts illustrating the method in the station of a WLAN according to embodiments.
**Figures 5a-b** are block diagrams schematically illustrating the station of a WLAN according to embodiments.

## DETAILED DESCRIPTION

In the following, different aspects will be described in more detail with references to certain embodiments and to accompanying drawings. For purposes of explanation and not limitation, specific details are set forth, such as particular scenarios and techniques, in order to provide a thorough understanding of the different embodiments. However, other embodiments that depart from these specific details may also exist. The scope of the invention is defined in the appended claims. Any reference to "embodiment(s)" or "aspect(s) of the invention" in this description not falling under the scope of the claims should be interpreted as illustrative example(s) for understanding the invention.

Embodiments are described in a non-limiting general context in relation to an example scenario in a WLAN, where the station is an access point receiving frames from transmitting mobile terminals, also referred to as stations, in the area served by the access point. However, it should be noted that the embodiments may be applied to any network technology compliant with IEEE 802.11. Furthermore, the station receiving frames may be any type of station such as a mobile terminal receiving frames from transmitting access points.

In embodiments of the invention, the problem of not being able to use combining techniques for frames in a WLAN due to that the transmitter addresses are not available, is addressed by a solution where the receiving station identifies if two frames are transmitted from a same transmitting station by comparing radio characteristics of the received frames. Frames from different transmitting stations will in many cases be received with different radio characteristics such as power or frequency response. They may also be received with different radio characteristics in terms of physical layer parameters, such as Modulation and Coding Schemes (MCS). Frames received with similar or equal radio characteristics may therefore be assumed to originate from the same transmitting station, and may thus be combined for improved performance.

In one exemplary embodiment of the invention, the method in the receiving station may comprise the following:

1) Receiving a first frame $Tx_1$.

2) If decoding of $Tx_1$ on the MAC layer fails, storing information $I_1$ for $Tx_1$ from the decoding.

3) Determining a radio characteristic $C_1$ for $Tx_1$.

4) Receiving a second frame $Tx_2$.

5) If decoding of $Tx_2$ on the MAC layer fails, storing information $I_2$ for $Tx_2$ from the decoding.

6) Determining a radio characteristic $C_2$ for $Tx_2$, where $C_2$ is the same type of radio characteristic as $C_1$.

7) Comparing $C_2$ with $C_1$.

8) if $C_2$ and $C_1$ are similar, combing $I_1$ and $I_2$.

9) Attempting to decode $Tx_2$ using the combination of $I_1$ and $I_2$.

The radio characteristics $C_2$ and $C_1$ of a frame used in the comparison in step 7) above may comprise one of the following:

- Average received power: The output power of a transmitting station is stable. Furthermore, the distance between transmitting and receiving stations does not vary much between retransmissions, nor does the power loss. This means that similar received power for received frames may indicate that the frames come from a same transmitting station.

- Angle of Arrival: Same assumptions as for average received power are possible. Transmission of two subsequent frames from a same transmitting station should not result in substantially different angle of arrival measurements at the receiving side.

- Frequency shifts: May comprises either shifts due to imperfections in the transmitter, or Doppler shifts due to that the transmitting or receiving station is moving. A frequency shift typically differs between different transmitters. As the receiver needs to estimate the frequency error between the transmitter and the receiver in order to perform a demodulation, this frequency error could be used as the radio characteristic type that is compared for two transmissions. The same estimated frequency error would thus indicate that the transmissions come from the same transmitting station.

- Received power as a function of frequency or frequency response of the channel.

- Power delay profile or the impulse response of the channel.

- Difference in the above listed parameters between different receive antennas of a station.

The types of radio characteristics listed above are determined by the receiving station based on measurements. However, the radio characteristics of the frame may also comprise physical layer parameters such as MCS, bandwidth, and length or duration of a frame, which may be obtained from the SIG field in the PLCP header of a WLAN frame and does thus not require a measurement. For example, in the 802.11n standard the PLCP header comprises a parameter indicating a number of octets of data in the frame in the so called High Throughput (HT) Length field.

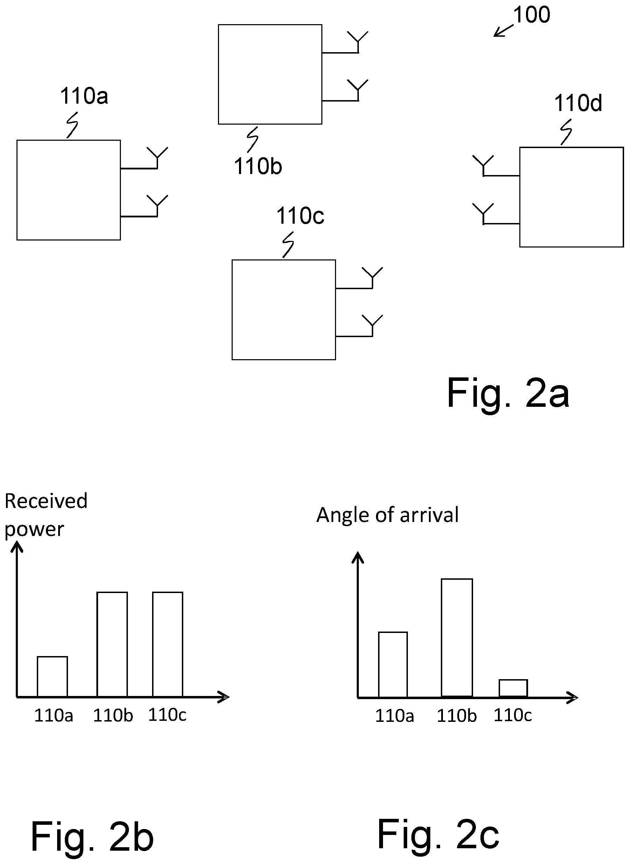

**Figure 2a** schematically illustrates an example scenario where three stations 110a, 110b, and 110c all transmit to a receiving station 110d. With similar transmit power at all the stations 110a, 110b, and 110c, the power received at station 110d from station 110a is smaller than that from stations 110b and 110c, due to the longer distance to the receiving station 110d. This is illustrated in the diagram of **Figure 2b.** The received powers from stations 110b and 110c are similar as their distances to the receiving station 110d are similar. However, the signals carrying frames from stations 110b and 110c have different angles of arrival at receiving station 110d, as illustrated in the diagram of **Figure 2c.** These radio characteristic types, i.e. average received power and angle of arrival may thus be used together to assess if two frames are received from a same station or not.

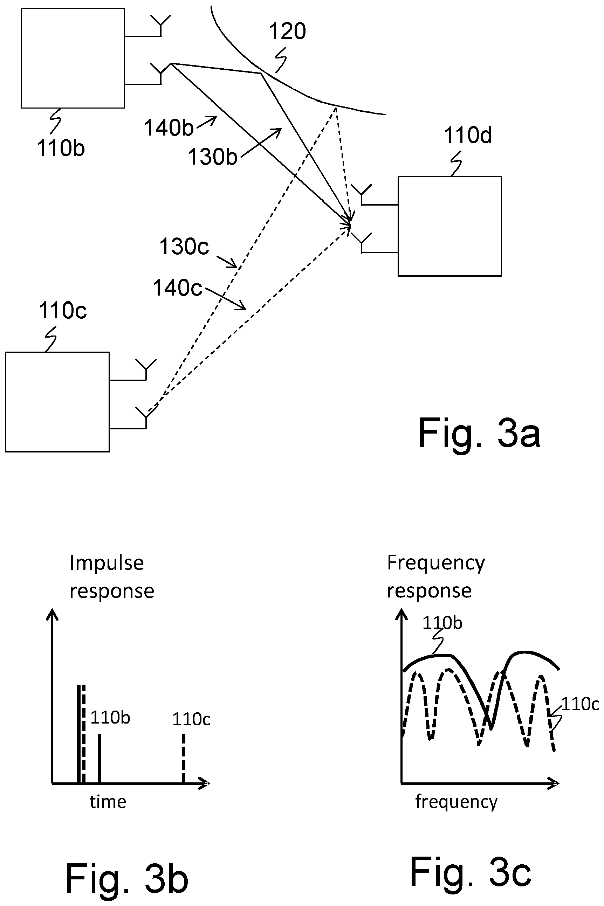

**Figure 3a** schematically illustrates an example scenario where two stations 110b and 110c both transmit to the receiving station 110d. The signal is reflected by an object 120 on its path to the receiving station 110d. The extra path length for the reflected path 130b, 130c, is longer for station 110c than for station 110b. This results in a longer delay between the direct path 140c and the reflected path 130c for station 110c than between the direct path 140b and the reflected path 130b for station 110b. This can be seen in the channel impulse response, or the power delay profile illustrated in the diagram of **Figure 3b.** The longer delay between direct path and reflected path may also be seen as faster variations in a frequency response for the channel between station 110b and station 110d, compared to the channel between station 110c and station 110d, as illustrated in the diagram of **Figure 3c.**

When using measured radio characteristics for the comparison, such as average received power or angle of arrival, the similarity check of the radio characteristics may comprise estimating a difference in the measured radio characteristic for the first and the second frame. If the estimated difference is below a selected threshold, the first and the second frames are assumed to be transmitted by the same station. As an example, if a first radio characteristic for $Tx_1$ and $Tx_2$ are denoted $Ca_1$ and $Ca_2$ respectively, the relative difference Da of the parameters may be calculated as:

$$Da = abs(Ca_1 - Ca_2)/((Ca_1 + Ca_2)/2) \qquad [1]$$

Similarity in the radio characteristic may be assessed as the difference being below a certain threshold $Da_{max}$, i.e. $Da < Da_{max}$.

By making more than one comparison of radio characteristics, the combining procedure may be further assured at the cost of an increased complexity. One example scenario where this may be needed is described above with reference to **Figure 2a** where both received power and angle of arrival is measured in order to be able to differentiate between station 110b and 110c. Eq. [1] may thus be used for other types of measured radio characteristics respectively denoted $Cb_1$, $Cb_2$; $Cc_1$, $Cc_2$; etc. In one embodiment, overall similarity based on several radio characteristic comparisons may be assumed when at least a fraction, e.g. 75%, of the radio characteristic comparisons are similar.

As mentioned above, the measured radio characteristic may comprise a frequency response for a received frame. If the frequency responses for two received frames are denoted h1(f) and h2(f), a mean square difference may be calculated as an integral over f:

$$\int_f [h_1(f) - h_2(f)]^2 df \qquad\qquad [2]$$

If the frequency response is discrete, i.e. if only a few samples are measured in frequency, a sum of the discrete values may be calculated instead of the integral. It may then be determined to combine the two frames if the calculated mean square difference is lower than a threshold value. If the measured radio characteristic comprises the impulse response for the received frame, the impulse response may be transformed to the frequency domain before using the same mean square difference calculation as above.

When comparing radio characteristics obtainable from the PLCP header, the comparison may be straight forward, as with the example of a comparison of the HT length field parameter. Two frames may be determined to be combined if the HT length field parameters of the two frames are equal. When comparing MCS parameters, it may be taken into account that the MCS may often be changed to a more robust MCS for a retransmission. Therefore, a frame with a less robust MCS in the header compared to an MCS parameter of a previously received frame may indicate that the two frames are received from different transmitting stations. It may thus be determined to combine two frames only when the MCS parameter of one frame is equal to or more robust than that of a previously received frame.

Methods and nodes

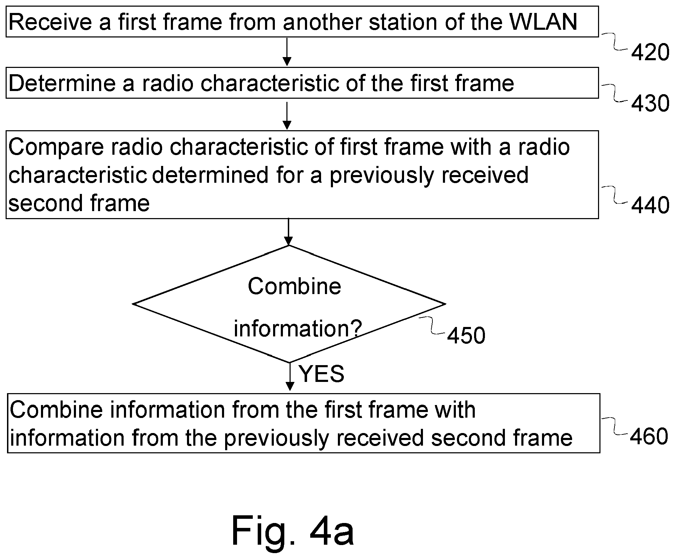

**Figure 4a** is a flowchart illustrating one embodiment of a method performed by a station 110d of a wireless local area network 100 for combining information from received frames. The method comprises:

- 420: Receiving a first frame from another station 110a of the wireless local area network.

- 430: Determining a radio characteristic of the first frame. This determining may comprise obtaining a physical layer parameter from a header of the first frame. Examples are obtaining the HT length field parameter or the MCS from the SIG field of the PLCP header. The determining may also comprise measuring the radio characteristic of the first frame. Examples are measuring the average received power or the angle of arrival. In embodiments, the radio characteristic is determined when failing to decode the first frame.

- 440: Comparing the radio characteristic of the first frame with a radio characteristic determined for a previously received second frame.

- 450: Determining whether to combine information from the first frame with information from the previously received second frame based on the comparison.

When it is determined to combine the information, the method further comprises:

- 460: Combining information from the first frame with information from the previously received second frame.

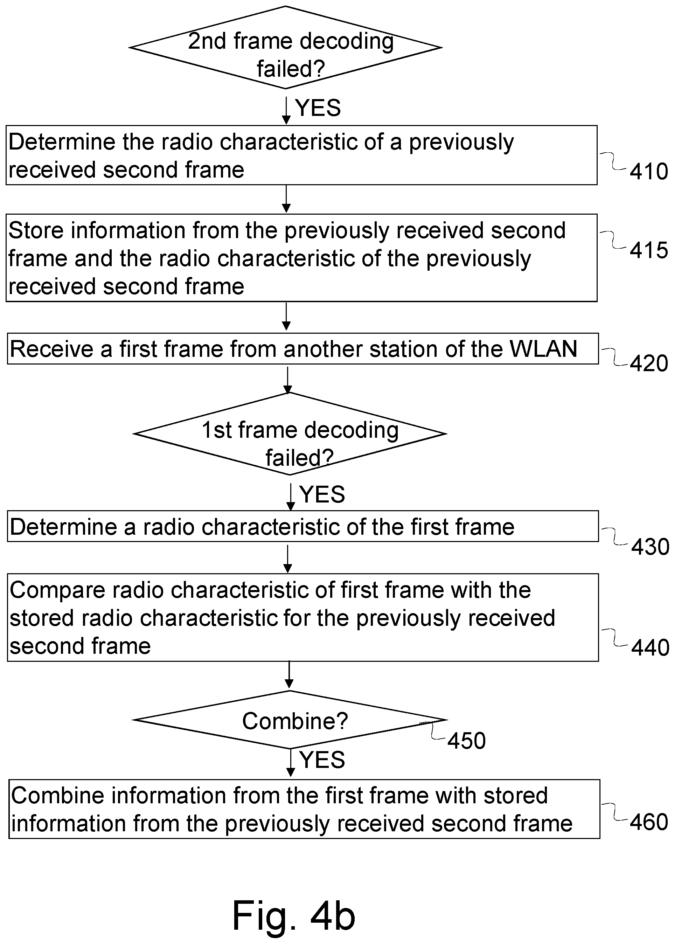

**Figure 4b** is a flowchart illustrating another embodiment of the method in the station 110d. The method optionally comprises when failing to decode the previously received second frame:

- 410: Determining the radio characteristic of the previously received second frame.

- 415: Storing information from the previously received second frame and the radio characteristic of the previously received second frame. The information and the radio characteristic may be stored such that it may be retrieved when a subsequently received frame's radio characteristic is to be compared with the previously received frame's radio characteristic.

The method further comprises, as in the previously described embodiment, receiving 420 the first frame from another station 110a of the wireless local area network and determining 430 the radio characteristic of the first frame. The radio characteristic may be determined 430 when failing to decode the first frame. Furthermore, the method comprises the following:

- 440: Comparing the radio characteristic of the first frame with the stored radio characteristic of the previously received second frame.

- 450: Determining whether to combine the information.

When it is determined to combine the information, the method further comprises:

- 460: Combining information from the first frame with the stored information from the previously received second frame.

In one embodiment, the comparing 440 comprises estimating a difference between the radio characteristic of the first frame and the radio characteristic determined for the previously received second frame. The estimation may for example be done based on eq. [1] above. In such an embodiment, it may be determined 450 to combine the information when the estimated difference is below a threshold value, such as $Da_{max}$ in the previously described example. The radio characteristics for which the estimation of a difference may be relevant is the measured radio characteristics. The radio characteristics may in embodiments comprise at least one of an average received power; an angle of arrival; an impulse response; and a frequency response.

In embodiments, the radio characteristic may comprise an MCS. The parameter indicating the MCS used by the transmitting station may be obtained from the SIG field in the PLCP header of the frame. It may be determined 450 to combine the information of the frames when the MCS of the first frame is equal to or more robust than the MCS of the previously received second frame.

In embodiments, the radio characteristic may comprise a frame length. The parameter indicating the length of the transmitted frame may be obtained from the SIG field in the PLCP header of the frame. It may be determined 450 to combine the information when the frame length of the first frame is equal to the frame length of the previously received second frame.

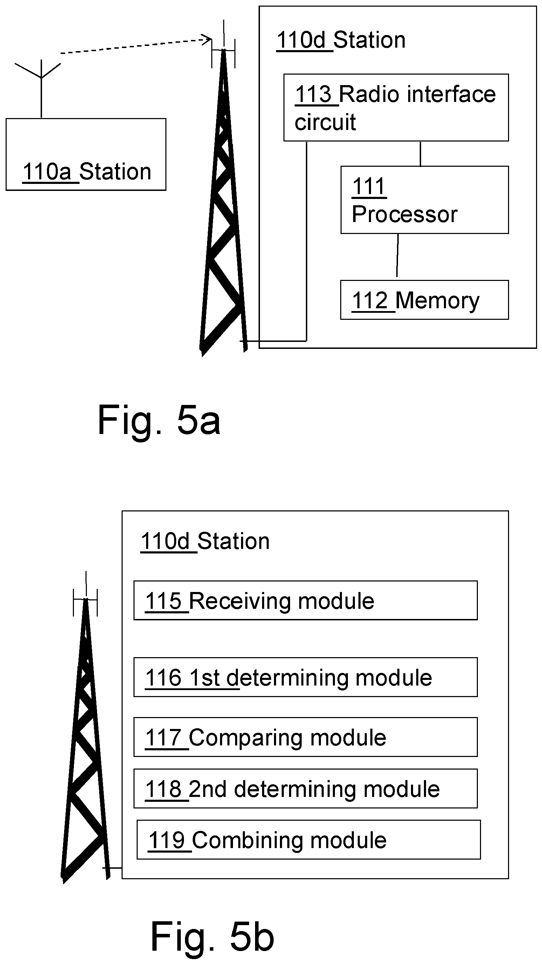

An embodiment of a station 110d for a wireless local area network (100) adapted to combine information from received frames, is schematically illustrated in the block diagram in **Figure 5a.** The station 110d is configured to receive a first frame from another station 110a of the WLAN, to determine a radio characteristic of the first frame, to compare the radio characteristic of the first frame with a radio characteristic determined for a previously received second frame, to determine whether to combine information from the first frame with information from the previously received second frame based on the comparison, and to combine information from the first frame with information from the previously received second frame when it is determined to combine the information.

In embodiments, the station 110d may be further configured to - when failing to decode the previously received second frame - determine the radio characteristic of the previously received second frame, and store information from the previously received second frame and the determined radio characteristic of the previously received second frame. The station may be configured to compare the determined radio characteristic of the first frame with the stored radio characteristic of the previously received second frame, and to combine information from the first frame with the stored information from the previously received second frame when it is determined to combine the information.

The station 110d may be further configured to determine the radio characteristic of the first frame by obtaining a physical layer parameter from a header of the first frame, such as the PLCP header. The station 110d may also be configured to determine the radio characteristic of the first frame by measuring the radio characteristic of the first frame. Furthermore, the station 110d may be configured to determine the radio characteristic of the first frame when failing to decode the first frame.

In embodiments, the station 110d may be further configured to compare by estimating a difference between the radio characteristic of the first frame and the radio characteristic determined for the previously received second frame, and to determine to combine the information when the estimated difference is below a threshold value. The radio characteristic may comprise at least one of: an average received power; an angle of arrival; an impulse response; and a frequency response.

In one embodiment, the radio characteristic comprises an MCS. The station 110d may be further configured to determine to combine the information when the MCS of the first frame is equal to or more robust than the MCS of the previously received second frame.

In another embodiment, the radio characteristic may comprise a frame length, and the station 110d may be further configured to determine to combine the information when the frame length of the first frame is equal to the frame length of the previously received second frame.

In embodiments of the invention, the station 110d comprises a processor 111 and a memory 112. The station 110d may also comprise a radio interface circuit 113 configured to communicate with the other stations 110a, 110b or 110c of the WLAN 100, and connected to the processor 111. The memory 112 contains instructions executable by said processor 111 whereby said station 110d is operative to receive a first frame from another station 110a, 110b, or 110c of the wireless local area network 100. The first frame may be received via the radio interface circuit 113. The station 110d is further operative to determine a radio characteristic of the first frame, to compare the radio characteristic of the first frame with a radio characteristic determined for a previously received second frame, to determine whether to combine information from the first frame with information from the previously received second frame based on the comparison, and to combine information from the first frame with information from the previously received second frame when it is determined to combine the information.

The station 110d may be further operative to, when failing to decode the previously received second frame, determine the radio characteristic of the previously received second frame, and to store information from the previously received second frame and the determined radio characteristic of the previously received second frame. The station 110d may be still further operative to compare the determined radio characteristic of the first frame with the stored radio characteristic of the previously received second frame, and combine information from the first frame with the stored information from the previously received second frame when it is determined to combine the information.

In an alternative way to describe the embodiment in **Figure 5a,** illustrated in **Figure 5b,** the station 110d comprises a receiving module 115 adapted to receive a first frame from another station of the wireless local area network, a first determining module 116 adapted to determine a radio characteristic of the first frame, a comparing module 117 adapted to compare the radio characteristic of the first frame with a radio characteristic determined for a previously received second frame, a second determining module 118 adapted to determine whether to combine information from the first frame with information from the previously received second frame based on the comparison, and a combining module 119 adapted to combine information from the first frame with information from the previously received second frame when it is determined to combine the information. The modules described above are functional units which may be implemented in hardware, software, firmware or any combination thereof. In one embodiment, the modules are implemented as a computer program running on a processor.

In an alternative way to describe the embodiment in **Figure 5a,** the station 110d comprises a Central Processing Unit (CPU) which may be a single unit or a plurality of units. Furthermore, the station 110d comprises at least one computer program product (CPP) in the form of a non-volatile memory, e.g. an EEPROM (Electrically Erasable Programmable Read-Only Memory), a flash memory or a disk drive. The CPP comprises a computer program, which comprises code means which when run on the station 110d causes the CPU to perform steps of the procedure described earlier in conjunction with **Figures 4a-b**. In other words, when said code means are run on the CPU, they correspond to the processor 111 of **Figure 5a.**

The above mentioned and described embodiments are only given as examples and should not be limiting. The scope of the invention is defined in the appended claims.

### Claims

1. A method performed by a station (110d) of a wireless local area network (100) for soft combining of multiple transmissions of the same data, the method comprising:

   - receiving (420) a first frame from another station (110a, 110b, 110c) of the wireless local area network;
   - determining (430) a radio characteristic of the first frame, wherein the radio characteristic comprises at least one of: an average received power, an angle of arrival and an impulse response;
   - comparing (440) the radio characteristic of the first frame with a radio characteristic determined for a previously received second frame, the comparing (440) comprising estimating a difference between the radio characteristic of the first frame and the radio characteristic determined for the previously received second frame;
   - determining (450) whether to combine information from the first frame with information from the previously received second frame based on the comparison, wherein it is determined (450) to combine the information when the estimated difference is below a threshold value;

   and when it is determined to combine the information:
   soft combining (460) information from the first frame with information from the previously received second frame.

2. The method according to claim 1, further comprising when failing to decode the previously received second frame:

   - determining (410) the radio characteristic of the previously received second frame,

- storing (415) information from the previously received second frame and the radio characteristic of the previously received second frame,
and wherein the radio characteristic of the first frame is compared (440) with the stored radio characteristic of the previously received second frame, and information from the first frame is soft combined (460) with the stored information
from the previously received second frame when it is determined to combine the information.

3. The method according to any of the preceding claims, wherein determining (430) the radio characteristic of the first frame comprises measuring the radio characteristic of the first frame.

4. A station (110d) for a wireless local area network (100) adapted for soft combining of multiple transmissions of the same data, the station being configured to:

   - receive a first frame from another station (110a, 110b, 110c) of the wireless local area network;
   - determine a radio characteristic of the first frame;
   - compare the radio characteristic of the first frame with a radio characteristic determined for a previously received second frame;
   - determine whether to combine information from the first frame with information from the previously received second frame based on the comparison;
   - soft combine information from the first frame with information from the
   previously received second frame when it is determined to combine the information; and
   the station being configured to compare by estimating a difference between the radio characteristic of the first frame and the radio characteristic determined for the previously received second frame, and to determine to combine the information when the estimated difference is below a threshold value, and
   wherein the radio characteristic comprises at least one of: an average received power, an angle of arrival and an impulse response.

5. The station (110d) according to claim 4 further configured to, when failing to decode the previously received second frame:

   - determine the radio characteristic of the previously received second frame,
   - store information from the previously received second frame and the determined radio characteristic of the previously received second frame,
   - compare the determined radio characteristic of the first frame with the stored radio characteristic of the previously received second frame, and
   - soft combine information from the first frame with the stored information from the previously received second frame when it is determined to combine the information.

6. The station (110d) according to any of claims 4-5, further configured to determine the radio characteristic of the first frame by measuring the radio characteristic of the first frame.


**Patentansprüche**

1. Verfahren, das von einer Station (110d) eines drahtlosen lokalen Netzwerks (100) zum weichen Kombinieren mehrerer Übertragungen der gleichen Daten durchgeführt wird, wobei das Verfahren umfasst:

   - Empfangen (420) eines ersten Frames von einer anderen Station (110a, 110b, 110c) des drahtlosen lokalen Netzwerks;
   - Bestimmen (430) einer Funkcharakteristik des ersten Frames, wobei die Funkcharakteristik mindestens eines der folgenden Elemente umfasst: eine durchschnittliche Empfangsleistung, einen Einfallswinkel und eine Impulsantwort;
   - Vergleichen (440) der Funkcharakteristik des ersten Frames mit einer Funkcharakteristik, die für einen zuvor empfangenen zweiten Frame bestimmt wurde, wobei das Vergleichen (440) das Schätzen einer Differenz zwischen der Funkcharakteristik des ersten Frames und der für den zuvor empfangenen zweiten Frame bestimmten Funkcharakteristik umfasst;
   - Bestimmen (450), ob Informationen aus dem ersten Frame mit Informationen aus dem zuvor empfangenen zweiten Frame auf der Grundlage des Vergleichs kombiniert werden sollen, wobei bestimmt (450) wird, die Informationen zu kombinieren, wenn die geschätzte Differenz unter einem Schwellenwert liegt;
und wenn bestimmt wird, die Informationen zu kombinieren: weiches Kombinieren (460) von Informationen aus dem ersten Frame mit Informationen aus dem zuvor empfangenen zweiten Frame.

2. Verfahren nach Anspruch 1, ferner umfassend, wenn der zuvor empfangene zweite Frame nicht dekodiert werden kann:

- Bestimmen (410) der Funkcharakteristik des zuvor empfangenen zweiten Frames,
- Speichern (415) von Informationen aus dem zuvor empfangenen zweiten Frame und der Funkcharakteristik des zuvor empfangenen zweiten Frames,
und wobei die Funkcharakteristik des ersten Frames mit der gespeicherten Funkcharakteristik des zuvor empfangenen zweiten Frames verglichen wird (440), und Informationen aus dem ersten Frame mit den gespeicherten Informationen aus dem zuvor empfangenen zweiten Frame weich kombiniert werden (460), wenn bestimmt wird, die Informationen zu kombinieren.

3. Verfahren nach einem der vorstehenden Ansprüche, wobei das Bestimmen (430) der Funkcharakteristik des ersten Frames das Messen der Funkcharakteristik des ersten Frames umfasst.

4. Station (110d) für ein drahtloses lokales Netzwerk (100), die für die weiche Kombination mehrerer Übertragungen der gleichen Daten geeignet ist, wobei die Station dazu ausgelegt ist:

- einen ersten Frame von einer anderen Station (110a, 110b, 110c) des drahtlosen lokalen Netzes zu empfangen;
- eine Funkcharakteristik des ersten Frames zu bestimmen;
- die Funkcharakteristik des ersten Frames mit einer Funkcharakteristik zu vergleichen, die für einen zuvor empfangenen zweiten Frame bestimmt wurde;
- zu bestimmen, ob Informationen aus dem ersten Frame mit Informationen aus dem zuvor empfangenen zweiten Frame auf der Grundlage des Vergleichs kombiniert werden sollen;
- Informationen aus dem ersten Frame mit Informationen aus dem zuvor empfangenen zweiten Frame weich zu kombinieren, wenn bestimmt wird, die Informationen zu kombinieren; und
wobei die Station ferner dazu ausgelegt ist, durch Schätzen einer Differenz zwischen der Funkcharakteristik des ersten Frames und der Funkcharakteristik, die für den zuvor empfangenen zweiten Frame bestimmt wurde, zu vergleichen und zu bestimmen, die Informationen zu kombinieren, wenn die geschätzte Differenz unter einem Schwellenwert liegt, und wobei die Funkcharakteristik mindestens eines der folgenden Elemente umfasst: eine durchschnittliche Empfangsleistung, einen Einfallswinkel und eine Impulsantwort.

5. Station (110d) nach Anspruch 4, ferner dazu ausgelegt, wenn der zuvor empfangene zweite Frame nicht dekodiert werden kann:

- die Funkcharakteristik des zuvor empfangenen zweiten Frames zu bestimmen,
- Informationen aus dem zuvor empfangenen zweiten Frame und die bestimmte Funkcharakteristik des zuvor empfangenen zweiten Frames zu speichern,
- die bestimmte Funkcharakteristik des ersten Frames mit der gespeicherten Funkcharakteristik des zuvor empfangenen zweiten Frames zu vergleichen, und
- Informationen aus dem ersten Frame mit den gespeicherten Informationen aus dem zuvor empfangenen zweiten Frame weich zu kombinieren, wenn bestimmt wird, die Informationen zu kombinieren.

6. Station (110d) nach einem der Ansprüche 4 bis 5, ferner dazu ausgelegt, die Funkcharakteristik des ersten Frames durch Messen der Funkcharakteristik des ersten Frames zu bestimmen.

**Revendications**

1. Procédé mis en œuvre par une station (110d) d'un réseau local sans fil (100) pour la combinaison souple de multiples transmissions des mêmes données, le procédé comprenant :

- la réception (420) d'une première trame depuis une autre station (110a, 110b, 110c) du réseau local sans fil ;
- la détermination (430) d'une caractéristique radio de la première trame, dans lequel la caractéristique radio comprend au moins l'un parmi : une puissance reçue moyenne, un angle d'arrivée et une réponse d'impulsion ;

- la comparaison (440) de la caractéristique radio de la première trame à une caractéristique radio déterminée pour une deuxième trame précédemment reçue, la comparaison (440) comprenant l'estimation d'une différence entre la caractéristique radio de la première trame et la caractéristique radio déterminée pour la deuxième trame précédemment reçue ;

- le fait de déterminer (450) s'il faut combiner les informations provenant de la première trame avec les informations provenant de la deuxième trame précédemment reçue sur la base de la comparaison, dans lequel il est déterminé (450) qu'il faut combiner les informations lorsque la différence estimée est inférieure à une valeur seuil ;

et lorsqu'il est déterminé qu'il faut combiner les informations :

la combinaison souple (460) des informations provenant de la première trame avec les informations provenant de la deuxième trame précédemment reçue.

2. Procédé selon la revendication 1, comprenant en outre lors d'un échec de décodage de la deuxième trame précédemment reçue :

- la détermination (410) de la caractéristique radio de la deuxième trame précédemment reçue,
- le stockage (415) des informations provenant de la deuxième trame précédemment reçue et de la caractéristique radio de la deuxième trame précédemment reçue,
et dans lequel la caractéristique radio de la première trame est comparée (440) à la caractéristique radio stockée de la deuxième trame précédemment reçue, et les informations provenant de la première trame subissent une combinaison souple (460) avec les informations stockées provenant de la deuxième trame précédemment reçue lorsqu'il est déterminé qu'il faut combiner les informations.

3. Procédé selon l'une quelconque des revendications précédentes, dans lequel la détermination (430) de la caractéristique radio de la première trame comprend la mesure de la caractéristique radio de la première trame.

4. Station (110d) pour un réseau local sans fil (100) conçue pour une combinaison souple de multiples transmissions des mêmes données, la station étant configurée pour :

- recevoir une première trame depuis une autre station (110a, 110b, 110c) du réseau local sans fil ;
- déterminer une caractéristique radio de la première trame ;
- comparer la caractéristique radio de la première trame à une caractéristique radio déterminée pour une deuxième trame précédemment reçue ;
- déterminer s'il faut combiner les informations provenant de la première trame avec les informations provenant de la deuxième trame précédemment reçue sur la base de la comparaison ;
- effectuer une combinaison souple des informations provenant de la première trame avec les informations provenant de la deuxième trame précédemment reçue lorsqu'il est déterminé qu'il faut combiner les informations ; et
la station étant configurée en outre pour comparer en estimant une différence entre la caractéristique radio de la première trame et la caractéristique radio déterminée pour la deuxième trame précédemment reçue, et pour déterminer qu'il faut combiner les informations lorsque la différence estimée est inférieure à une valeur seuil, et dans laquelle la caractéristique radio comprend au moins l'un parmi : une puissance reçue moyenne, un angle d'arrivée et une réponse d'impulsion.

5. Station (110d) selon la revendication 4 configurée en outre pour, lors d'un échec de décodage de la deuxième trame précédemment reçue :

- déterminer la caractéristique radio de la deuxième trame précédemment reçue,
- stocker les informations provenant de la deuxième trame précédemment reçue et la caractéristique radio déterminée de la deuxième trame précédemment reçue,
- comparer la caractéristique radio déterminée de la première trame à la caractéristique radio stockée de la deuxième trame précédemment reçue, et
- effectuer une combinaison souple des informations stockées provenant de la première trame avec les informations provenant de la deuxième trame précédemment reçue lorsqu'il est déterminé qu'il faut combiner les informations.

6. Station (110d) selon l'une quelconque des revendications 4 ou 5, configurée en outre pour déterminer la caractéristique radio de la première trame en mesurant la caractéristique radio de la première trame.

Fig. 1a

EP 3 120 479 B1

Fig. 1b

| Modulation and Coding Scheme | | | | | | | CBW 20/40 | HT Length | | | | | | | | | | | | | | | |
|---|---|---|---|---|---|---|---|---|---|---|---|---|---|---|---|---|---|---|---|---|---|---|---|
| LSB | | | | | | MSB | | LSB | | | | | | | | | | | | | | | MSB |
| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |

HT-SIG₁

| Smoothing | Not Sounding | Reserved | Aggregation | STBC | | FEC CODING | SHORT GI | Number of Extension Spatial Streams | | CRC | | | | | | | | Tail Bits | | | | | |
|---|---|---|---|---|---|---|---|---|---|---|---|---|---|---|---|---|---|---|---|---|---|---|---|
| 0 | 1 | 2 | 3 | 4 | 5 | 6 | 7 | 8 | 9 | C7 10 | 11 | 12 | 13 | 14 | 15 | 16 | C0 17 | 18 | 19 | 20 | 21 | 22 | 23 |

LSB     LSB     HT-SIG₂

## Fig. 1c

Fig. 2a

Fig. 2b

Fig. 2c

Fig. 3a

Fig. 3b

Fig. 3c

Receive a first frame from another station of the WLAN | 420

Determine a radio characteristic of the first frame | 430

Compare radio characteristic of first frame with a radio characteristic determined for a previously received second frame | 440

Combine information? | 450

YES

Combine information from the first frame with information from the previously received second frame | 460

# Fig. 4a

```
                    ╱‾‾‾‾‾‾‾‾‾‾‾‾‾‾‾╲
                 ╱   2nd frame decoding  ╲
                ╲        failed?          ╱
                    ╲_____╱
                            │YES
    ┌───────────────────────▼──────────────────────┐
    │ Determine the radio characteristic of a previously │╮
    │ received second frame                          │╯╲─410
    └───────────────────────┬──────────────────────┘
                            ▼
    ┌──────────────────────────────────────────────┐
    │ Store information from the previously received second │╮
    │ frame and the radio characteristic of the previously │╯╲─415
    │ received second frame                          │
    └───────────────────────┬──────────────────────┘
                            ▼
    ┌──────────────────────────────────────────────┐
    │ Receive a first frame from another station of the WLAN │╮─420
    └───────────────────────┬──────────────────────┘╯
                            ▼
                    ╱‾‾‾‾‾‾‾‾‾‾‾‾‾‾‾╲
                 ╱    1st frame decoding ╲
                ╲        failed?          ╱
                    ╲_____╱
                            │YES
    ┌───────────────────────▼──────────────────────┐
    │ Determine a radio characteristic of the first frame │╮─430
    └───────────────────────┬──────────────────────┘╯
                            ▼
    ┌──────────────────────────────────────────────┐
    │ Compare radio characteristic of first frame with the │
    │ stored radio characteristic for the previously received │╮
    │ second frame                                   │╯╲─440
    └───────────────────────┬──────────────────────┘
                            ▼
                    ╱‾‾‾‾‾‾‾‾‾‾‾‾‾‾‾╲
                 ╱       Combine?        ╲─450
                ╲_____╱
                            │YES
    ┌───────────────────────▼──────────────────────┐
    │ Combine information from the first frame with stored │╮
    │ information from the previously received second frame │╯╲─460
    └──────────────────────────────────────────────┘
```

# Fig. 4b

110d Station

113 Radio interface circuit

111 Processor

112 Memory

110a Station

## Fig. 5a

110d Station

115 Receiving module

116 1st determining module

117 Comparing module

118 2nd determining module

119 Combining module

## Fig. 5b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050235190 A

- EP 1843503 A

**Non-patent literature cited in the description**

- **DAHLMAN, ERIK ; PARKVALL, STEFAN ; SKÖLD, JOHAN ; BEMING, PER.** 3G Evolution - HSPA and LTE for Mobile Broadband. Academic Press, 2008, 119-123